# EUROPÄISCHE PATENTSCHRIFT

(11) **EP 4 339 073 B1**
(45) Veröffentlichungstag und Bekanntmachung des Hinweises auf die Patenterteilung: **10.12.2025**
(21) Anmeldenummer: 23191537.2
(22) Anmeldetag: 15.08.2023
(51) Int. Cl.: B62D 9/00

(54) **SICHERHEITSSYSTEM ZUR FAHRZEUGQUERFÜHRUNG FÜR EIN STEER-BY-WIRE LENKSYSTEM EINES KRAFTFAHRZEUGES, SICHERHEITSVERFAHREN UND KRAFTFAHRZEUG**
SAFETY SYSTEM FOR VEHICLE LATERAL GUIDANCE FOR A STEER-BY-WIRE STEERING SYSTEM OF A MOTOR VEHICLE, SAFETY METHOD AND MOTOR VEHICLE
SYSTÈME DE SÉCURITÉ POUR LE GUIDAGE TRANSVERSAL D'UN VÉHICULE POUR UN SYSTÈME DE DIRECTION À COMMANDE ÉLECTRIQUE D'UN VÉHICULE AUTOMOBILE, PROCÉDÉ DE SÉCURITÉ ET VÉHICULE AUTOMOBILE

(30) Priorität: 14.09.2022 DE 102022209604
(43) Veröffentlichungstag der Anmeldung: 20.03.2024
(73) Patentinhaber: VOLKSWAGEN AG, 38440 Wolfsburg (DE)
(72) Erfinder: Salzwedel, Leon, 38106 Braunschweig (DE); Bartels, Arne, 38448 Wolfsburg (DE); Bärecke, Frank, 38444 Wolfsburg (DE)

(56) Entgegenhaltungen:
- DE-A1- 102019 007 715
- US-B2- 8 234 045

## Beschreibung

Die Erfindung betrifft ein Sicherheitssystem mit den Merkmalen des unabhängigen Patentanspruchs 1, ein Sicherheitsverfahren mit den Merkmalen des unabhängigen Patentanspruchs 5 sowie ein Kraftfahrzeug mit den Merkmalen des unabhängigen Patentanspruchs 14.

Lenksysteme, beispielsweise ein Steer-by-Wire-System, beeinflussen zur Fahrzeugquerführung den Radlenkwinkel an der Vorderachse, um dem Kraftfahrzeug eine laterale Bewegung, beziehungsweise eine Gierbewegung aufzuprägen.

Das Aufprägen eines Giermoments auf ein Kraftfahrzeug durch radselektive Bremseingriffe und Antriebsmomente ist bekannt. Es findet bereits Anwendung in verschiedenen Fahrerassistenzsystemen, wie z. B. der elektronischen Stabilitätskontrolle (ESC). Mit einem solchen System wird in der Regel das Steuerverhalten des Fahrzeugs beeinflusst, beziehungsweise korrigiert. Dabei ist immer auch die Lenkung des Fahrzeugs aktiv, beziehungsweise aktuiert.

Auch bekannt ist die Möglichkeit, Fahrzeuge mit positivem Lenkrollradius über das Anbremsen der kurveninneren Räder an der Vorderachse zu lenken. LKW haben einen solchen positiven Lenkrollradius, sodass dies für LKW eine zielführende Lösung ist. PKW können je nach Auslegung sowohl einen negativen als auch positiven Lenkrollradius haben. Beim negativen Lenkrollradius wirkt das Giermoment aus der Aktuierung der Lenkung kompensierend. Dabei kann in Summe das Giermoment aus der radselektiven Bremsung (teilweise) kompensiert oder sogar überkompensiert werden. Eine Querführung nur durch radselektives Bremsen an der Vorderachse ist also nicht immer eine zielführende Lösung.

Bei Steer-by-Wire wird die mechanische Verbindung zwischen Lenkrad / Lenksäulenmodul und Lenkgetriebe an der Achse aufgebrochen, und durch eine redundante Datenleitung ersetzt. Die vom Fahrer verdrehte Lenksäule als "mechanische Rückfallebene" entfällt. Das Gesamtsystem (in der Regel nur die Lenkung), welches die Querdynamik beeinflusst, muss daher die Sicherheits- und Verfügbarkeitsanforderung ASIL D erfüllen.

Zur Erfüllung dieser Sicherheitsanforderung muss das Steer-by-Wire-System nach heutigem Stand der Technik mindestens einfach redundant ausgelegt werden. Dies erfolgt z. B. durch doppelte Wicklungen im Motor, doppelt vorgehaltenes Steuergerät, doppelter elektrischer Energieversorgung und doppelter Datenkommunikation.

Bei einfacher Redundanz muss nach einem Fehler im Steer-by Wire-System das Kraftfahrzeug formal nach kurzer Zeit angehalten werden, da ein weiterer Fehler zu einem nicht lenkbaren Kraftfahrzeug führen würde. Rein statistisch wird ein zweiter Ausfall wenig wahrscheinlich sein, aber eben nicht unmöglich, daher wird z. B. bei der Bremse in diesem Fall immer noch die Hilfsbremswirkung gefordert. Eine einfache Redundanz führt bei einem Fehler also praktisch nach kurzer Zeit zu einem harten Liegenbleiber, also zum Liegenbleiben des Kraftfahrzeugs, da die Lenkung nicht mehr funktionsfähig ist.

Eine doppelte Redundanz bzw. eine zweite Rückfallebene für ein Steer-by-Wire System wäre also grundsätzlich wünschenswert, da nach einem Fehler das Kraftfahrzeug noch weiterfahren könnte, wobei im Doppelfehlerfall die Anforderungen an diese zweite Rückfallebene gegenüber dem Ein- und Nullfehlerfall deutlich reduziert sein können. Eine doppelte Redundanz kann z. B. durch den Vorhalt weiterer Technik erzielt werden, wie z. B. ein dreifach vorgehaltenes Steuergerät oder ein Motor mit dreifacher Wicklung (siehe Flugzeugtechnik). Dies ist aber sehr aufwändig beziehungsweise kostenintensiv.

Beispiele für Sicherheitssysteme zur Fahrzeugquerführung sind in der DE 10 2019 007 715 A1 , welche die Merkmale des Oberbegriffs des unabhängigen Anspruchs 1 zeigt, sowie US 8 234 045 B2 offenbart.

Es ist daher eine Aufgabe der vorliegenden Erfindung, wenigstens einen der voranstehend beschriebenen Nachteile bei Sicherheitssystemen zur Fahrzeugquerführung für ein Steer-by-Wire Lenksystem eines Kraftfahrzeuges zumindest teilweise zu überwinden. Insbesondere ist es Aufgabe der Erfindung eine kostengünstige und einfache Rückfallebene bei der Fahrzeugquerführung für ein Steer-by-Wire Lenksystem eines Kraftfahrzeuges zur Verfügung zu stellen.

Die voranstehende Aufgabe wird gelöst durch ein Sicherheitssystem mit den Merkmalen des unabhängigen Patentanspruchs 1, durch ein Sicherheitsverfahren mit den Merkmalen des unabhängigen Patentanspruchs 5 sowie durch ein Kraftfahrzeug mit den Merkmalen des unabhängigen Patentanspruchs 14. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Sicherheitssystem beschrieben sind, selbstverständlich auch im Zusammenhang mit dem erfindungsgemäßen Sicherheitsverfahren und/oder im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird bzw. werden kann.

Erfindungsgemäß vorgesehen ist ein Sicherheitssystem zur Fahrzeugquerführung für ein Steer-by-Wire Lenksystem eines Kraftfahrzeuges, mit einer Hauptbetriebsebene zur Übertragung eines Lenkradwinkels an zumindest ein Rad des Kraftfahrzeugs, und mit einer Sicherheitsebene zur Übertragung eines Lenkradwinkels an zumindest ein Rad des Kraftfahrzeugs, wobei die Sicherheitsebene dazu eingerichtet ist, bei einem Ausfall der Hauptbetriebsebene aktiv zu werden, wobei eine Not-Betriebsebene zur Fahrzeugquerführung vorgesehen ist, wobei die Not-Betriebsebene dazu eingerichtet ist, bei einem Ausfall der Hauptbetriebsebene und/oder Sicherheitsebene aktiv zu werden.

Dabei sind die Hauptebene und die Sicherheitsebene als redundantes System ausgestaltet, d.h. sie sind identisch aufgebaut. Sowohl die Hauptebene als auch die Sicherheitsebene weisen jeweils eine Steuerungseinheit, einen Lenkradwinkelsensor und zumindest einen Radlenkwinkelaktuator auf, um die Fahrzeugquerführung durchführen zu können. Bei der Fahrzeugquerführung handelt es sich um die Querführung eines Kraftfahrzeugs im Fall der Lenkung, oder auch im Fall einer Notbremsung aufgrund der Aktion eines Fahrassistenten, oder ähnliches. Durch die Längskräfte und Querkräfte wird dem Kraftfahrzeug ein Giermoment um die Hochachse aufgeprägt, wodurch wiederum die Fahrzeugsteuerung erwirkt wird, das heißt, dass die Spur gehalten wird. Als Ausfall, vor allem einem Ausfall der Hauptebene und der Sicherheitsebene, wird vorliegend verstanden, dass zumindest ein sicherheitsrelevantes Bauteil der Radlenkwinkelaktuator der jeweiligen Ebene ausfällt. Fällt also der zumindest eine Radlenkwinkelaktuator und/oder die Steuereinheit aus, wird die jeweils darunter angeordnete Ebene aktiviert.

Die Sicherheitsebene wird also aktiviert, wenn zumindest eines der Bauteile Radwinkelaktuator und/oder Steuereinheit der Hauptebene ausfällt. Fällt dann eines der Bauteile in der Sicherheitsebene aus, wird die Not-Betriebsebene aktiviert. Die Not-Betriebsebene greift dann auf die Daten des Lenkwinkelsensors der Hauptebene oder der Sicherheitsebene zu, um die Fahrzeugquerführung gewährleisten zu können. Vorteilhaft ist dabei, dass die Notfallebene eine weitere Rückfallebene zur Verfügung stellt, um ein Liegenbleiben aufgrund einer fehlerhaften Lenkung zu verhindern. Ferner kann die Notfallebene vorteilhafterweise auf das bestehende System zugreifen und somit auch in das bereits bestehende System integriert werden.

Im Rahmen der Erfindung kann es von Vorteil sein, dass die Not-Betriebsebene dazu eingerichtet ist, aus einer Eingangsgröße der Soll-Spur eine Ist-Spur zu erzeugen.

Dabei korreliert die Eingangsgröße der Not-Betriebsebene mit dem Lenkradwinkel und entspricht der Soll-Fahrzeug-Reaktion, also der Reaktion, die vom Kraftfahrzeug ausgeführt werden soll. Eine Änderung des Lenkradwinkels erzeugt dabei eine neue Eingangsgröße der Soll-Spur, woraufhin die Not-Betriebsebene eine neue Ist-Spur erzeugt. Es kann also zügig auf eine Änderung der Soll-Spur reagiert werden, um in dem Sicherheitssystem eine neue Ist-Spur zu erzeugen.

Im Rahmen der Erfindung ist es denkbar, dass die Not-Betriebsebene, insbesondere mittels einer Not-Kontrolleinheit, dazu eingerichtet ist, aus einer Eingangsgröße der Soll-Spur eine erste Bremskraft oder eine erste Antriebskraft für ein erstes Rad des Kraftfahrzeugs und/oder eine zweite Bremskraft oder eine zweite Antriebskraft für ein zweites Rad des Kraftfahrzeugs und/oder eine dritte Bremskraft oder dritte Antriebskraft für ein drittes Rad und/oder eine vierte Bremskraft oder vierte Antriebskraft für ein viertes Rad des Kraftfahrzeugs zu berechnen.

Für die Steuerung der Fahrzeugquer- und Gierbewegung im Fehlerfall eines Lenksystems verwendet das Sicherheitssystem vorteilhafterweise radselektive Brems- und Antriebsmomente. Durch die Längskräfte bzw. Querkräfte wird dem Kraftfahrzeug ein Giermoment um die Hochachse aufgeprägt, wodurch wiederum die Fahrzeugsteuerung erwirkt wird. Dabei ist es denkbar, dass die Not-Kontrolleinheit nur einem Rad eine Bremskraft oder Antriebskraft berechnet oder diese für alle Räder berechnet. Es ist denkbar, dass die Not-Kontrolleinheit für ein erstes Rad und ein drittes Rad des Kraftfahrzeugs eine Antriebskraft und für ein zweites Rad und ein viertes Rad des Kraftfahrzeugs eine Bremskraft berechnet. Die Möglichkeit des radselektiven Eingreifens in Bezug auf das Aufprägen einer Bremskraft und/oder Antriebskraft ermöglicht eine Feinabstimmung der Lenkbewegung und eine Optimierung des Giermoments. Dies wirkt sich positiv auf die Stabilisierung des Kraftfahrzeugs aus.

Es kann im Rahmen der Erfindung vorgesehen sein, dass in einer Not-Kontrolleinheit der Not-Betriebsebene ein Fahrzeugmodell, ein Modell zur Berechnung von Soll-Brems- oder Antriebskräften und ein Fahrwerkmodell zur Berechnung der ersten Bremskraft oder ersten Antriebskraft für ein erstes Rad des Kraftfahrzeugs und/oder eine zweite Bremskraft oder zweite eine Antriebskraft für ein zweites Rad des Kraftfahrzeugs und/oder eine dritte Bremskraft oder dritte Antriebskraft für ein drittes Rad und/oder eine vierte Bremskraft oder vierte Antriebskraft für ein viertes Rad des Kraftfahrzeugs hinterlegt ist.

Bei dem hinterlegten Fahrzeugmodell kann es sich vor allem um Daten über das jeweilige Fahrzeug, wie Radstand, Länge und Höhe des Kraftfahrzeugs, bzw. weitere Abmessungen, die benötigt werden könnten, um die Brems- und Antriebskräfte zu berechnen, handeln.

Des Weiteren lässt sich aufgrund des Modells zur Berechnung des Giermoments, das Giermoment, insbesondere das Giermoment in Abhängigkeit des Fahrzeugmodells, leichter und damit einfacher und genauer berechnen. Durch die Hinterlegung des Fahrwerkmodells lassen sich genauere Berechnungen der Bremskräfte oder Antriebskräfte durchführen. Das Fahrwerkmodell umfasst dabei vor allem Daten über die Antriebsart, also ob das Kraftfahrzeug einen Front- oder Heckantrieb aufweist, oder, ob es sich, um einen Allrad-Antrieb oder Einzelradantrieb handelt. Des Weiteren kann das Fahrwerkmodell Daten der Räder, vor allem Daten über das Gegenlenken der Räder beim Aufbringen der Bremskräfte oder Antriebskräfte, also ein Stör-Giermoment, an das Modell zur Berechnung des Giermoments weitergeben. Die Kombination der einzelnen Modelle erhöht die Genauigkeit der Berechnungen und erhöht die Sicherheit des Kraftfahrzeugs auch im Not-Betrieb. Ferner optimiert eine genaue Berechnung den Fahrkomfort, da die Räder optimal angesteuert werden können.

Die obenstehende Aufgabe wird ferner gelöst durch ein erfindungsgemäßes Sicherheitsverfahren zur Fahrzeugquerführung mit einem oben beschriebenen Sicherheitssystem, umfassend die folgenden Schritte:
- Feststellen eines Ausfalls der Hauptbetriebsebene, und/oder
- Feststellen eines Ausfalls der Sicherheitsebene,
- Aktivieren der Not-Betriebsebene zur Fahrzeugquerführung, wobei in der Not-Betriebsebene eine Not-Kontrolleinheit aus einer Soll-Spur eine Ist-Spur des Kraftfahrzeugs erzeugt.

Bei der Fahrzeugquerführung handelt es sich um die Querführung eines Kraftfahrzeugs im Fall der Lenkung, oder auch im Fall einer Notbremsung aufgrund der Aktion eines Fahrassistenten, oder ähnliches. Die Fahrzeugquerführung ist vor allem bei Kurvenfahrten relevant. Die Fahrzeugquerführung, das heißt die aufgebrachten Längskräfte und Querkräfte, prägt dem Kraftfahrzeug ein Giermoment um die Hochachse auf. Dies erwirkt wiederum die Fahrzeugsteuerung, das heißt, dass die Spur gehalten wird. Als Ausfall, vor allem ein Ausfall der Hauptebene und der Sicherheitsebene, wird vorliegend verstanden, dass zumindest ein sicherheitsrelevantes Bauteil der Lenkung der jeweiligen Ebene ausfällt. Fällt also der zumindest eine Radlenkwinkelaktuator und/oder die Steuereinheit aus, wird die jeweils darunter angeordnete Ebene aktiviert.

Die Sicherheitsebene wird also aktiviert, wenn zumindest eines der Bauteile Radwinkelaktuator und/oder Steuereinheit der Hauptebene ausfällt. Fällt dann eines der Bauteile in der Sicherheitsebene aus, wird die Not-Betriebsebene aktiviert. Die Not-Betriebsebene ist dabei so ausgelegt, dass sie erfasst, wenn die Sicherheitsebene ausfällt. Denkbar wäre auch, dass die Sicherheitsebene bei Ausfall die Not-Betriebsebene aktiviert. Die Not-Betriebsebene greift erfindungsgemäß auf die Daten des Lenkwinkelsensors der Hauptebene oder der Sicherheitsebene zu, um die Fahrzeugquerführung gewährleisten zu können. Vorteilhaft ist dabei, dass die Notfallebene eine weitere Rückfallebene zur Verfügung stellt, um ein Liegenbleiben aufgrund einer fehlerhaften Lenkung zu verhindern. Ferner kann die Notfallebene in vorteilhafter Weise auf das bestehende System zu greifen und somit auch in das bereits bestehende System integriert werden. Damit erhöht sich auf einfache Art und Weise die Sicherheit des Kraftfahrzeugs bei einem Ausfall der Lenkung.

Es ist erfindungsgemäß denkbar, dass die Not-Kontrolleinheit aus einer Eingangsgröße der Soll-Spur die Ist-Spur erzeugt, wobei durch die Not-Kontrolleinheit zumindest eine erste Bremskraft oder erste Antriebskraft für ein erstes Rad des Kraftfahrzeugs und/oder eine zweite Bremskraft oder eine zweite Antriebskraft für ein zweites Rad des Kraftfahrzeugs und/oder eine dritte Bremskraft oder dritte Antriebskraft für ein drittes Rad und/oder eine vierte Bremskraft oder vierte Antriebskraft für ein viertes Rad des Kraftfahrzeugs berechnet wird.

Dabei korreliert die Eingangsgröße der Not-Betriebsebene mit dem Lenkradwinkel und entspricht der Soll-Fahrzeug-Reaktion. Eine Änderung des Lenkradwinkels erzeugt dabei eine neue Eingangsgröße der Soll-Spur, woraufhin die Not-Betriebsebene eine neue ist-Spur erzeugt. Es kann also zügig auf eine Änderung der Soll-Spur reagiert werden, um dem Sicherheitssystem eine neue Ist-Spur zu erzeugen. Die Eingangsgröße bildet also die Fahrzeugreaktion ab.

Auch ist es denkbar, dass in der Not-Kontrolleinheit ein Fahrzeugmodell hinterlegt ist, wobei mittels des Fahrzeugmodells aus der Eingangsgröße ein Soll-Giermoment des Kraftfahrzeugs ermittelt wird, und wobei aus dem Soll-Giermoment eine erste Bremskraft oder erste Antriebskraft für ein erstes Rad des Kraftfahrzeugs und/oder eine zweite Bremskraft oder eine zweite Antriebskraft für ein zweites Rad des Kraftfahrzeugs und/oder eine dritte Bremskraft oder dritte Antriebskraft für ein drittes Rad und/oder eine vierte Bremskraft oder vierte Antriebskraft für ein viertes Rad des Kraftfahrzeugs berechnet wird.

Bei dem hinterlegten Fahrzeugmodell kann es sich vor allem um Daten über das jeweilige Fahrzeug, wie Radstand, Länge und Höhe des Kraftfahrzeugs, bzw. weitere Abmessungen, die benötigt werden könnten, um die Brems- und Antriebskräfte zu berechnen, handeln. Die Gierrate (auch Giergeschwindigkeit) bezeichnet die Winkelgeschwindigkeit der Drehung eines Fahrzeuges um seine Hochachse. Die Hinterlegung des Fahrzeugmodells lässt eine verbesserte und genauere Berechnung der Brems- und Antriebskräfte zu.

Im Rahmen der Erfindung ist es optional möglich, dass auf der Not-Kontrolleinheit ein Fahrwerkmodell hinterlegt ist, wobei mittels des Fahrwerkmodells aus der am ersten Rad des Kraftfahrzeugs eingestellten ersten Bremskraft oder der ersten Antriebskraft und/oder der am zweiten Rad des Kraftfahrzeugs eingestellten zweiten Bremskraft oder der zweiten Antriebskraft und/oder der am dritten Rad des Kraftfahrzeugs eingestellten dritten Bremskraft oder der dritten Antriebskraft und/oder der am vierten Rad des Kraftfahrzeugs eingestellten vierten Bremskraft oder der vierten Antriebskraft ein Stör-Giermoment ermittelt wird.

Durch die Hinterlegung des Fahrwerkmodells lassen sich genauere Berechnungen der Bremskräfte oder Antriebskräfte durchführen. Das Fahrwerkmodell umfasst dabei vor allem Daten über die Antriebsart bzw. ob das Kraftfahrzeug einen Front- oder Heckantrieb aufweist, oder, ob es sich, um einen Allrad-Antrieb oder Einzelradantrieb handelt. Des Weiteren kann das Fahrwerkmodell Daten der Räder, vor allem Daten über das Gegenlenken der Räder beim Aufbringen der Bremskräfte oder Antriebskräfte, also ein Stör-Giermoment, ermitteln und an die Not-Kontrolleinheit rückkoppeln.

Denkbar wäre hier, dass das Stör-Giermoment an das Modell zur Berechnung der Soll-Brems- und/oder Antriebskräfte weitergegeben wird. Das Modell zur Berechnung des Ist- Giermoments kann das Stör-Giermoment und das Soll-Giermoment berücksichtigen, um in einem iterativen Prozess die Brems- und Antriebskräfte für die jeweiligen einzelnen Räder oder alle Räder zu berechnen, um die Ist-Spur zu erzeugen. Dies erhöht die Sicherheit und den Fahrkomfort.

Ferner kann es im Rahmen der Erfindung vorgesehen sein, dass das Fahrwerkmodell berücksichtigt, dass das Kraftfahrzeug einen Einzelradantrieb oder einen Vorderachsantrieb oder einen Hinterachsantrieb oder einen Allradantrieb aufweist.

Dies ermöglicht es, die Antriebs- und Bremsmomente radselektiv oder über ein Differential vorzugeben, um die Ist-Spur so genau wie möglich mittels der Antriebs- und Bremskräfte zu generieren. Dies erhöht die Sicherheit und den Fahrkomfort.

In Bezug auf die vorliegende Erfindung ist es vorstellbar, dass auf der Not-Kontrolleinheit ein Modell zur Berechnung von Soll-Brems- und/oder Antriebskräften hinterlegt ist, wobei durch das Modell zur Berechnung von Soll-Brems- und/oder Antriebskräften zur Ermittlung der Soll-Brems- und/oder Antriebskräfte das Soll-Giermoment aus dem Fahrzeugmodell und das Stör-Giermoment aus dem Fahrwerkmodell für die Berechnung der ersten Bremskraft oder ersten Antriebskraft für ein erstes Rad des Kraftfahrzeugs und/oder eine zweite Bremskraft oder zweite eine Antriebskraft für ein zweites Rad des Kraftfahrzeugs und/oder eine dritte Bremskraft oder dritte Antriebskraft für ein drittes Rad und/oder eine vierte Bremskraft oder vierte Antriebskraft für ein viertes Rad des Kraftfahrzeugs überlagert werden.

Durch die Überlagerung des Soll-Giermoments mit dem Stör-Giermoment können die Einflüsse des Gegenlenkens der Räder mit einberechnet werden, um die Ist-Spur optimal zu erzeugen. Dadurch kann die Ist-Spur flexibel angepasst werden. Eine schnelle Anpassung der Ist-Spur an die aus den Eingangsgrößen erzeugten Soll-Giermomente und des Stör-Giermoments ermöglicht eine Erhöhung der Sicherheit des Sicherheitssystems.

Im Rahmen der Erfindung kann es von Vorteil sein, dass die Soll-Spur mittels eines Fahrsystems erzeugt wird, wobei die Eingangsgröße der Not-Betriebsebene mit der Soll-Spur korreliert.

Das Fahrsystem ist hier vor allem ein System zum automatisierten oder autonomen Fahren. Vorteilhaft bei der Nutzung eines Fahrsystems in dem Sicherheitsverfahren ist vor allem, dass das Fahrsystem auf bestehende Fahrassistenten oder Daten des Fahrzeugs zugreifen kann, um die Brems- und Antriebskräfte berechnen zu können. Durch den Zugriff auf sämtliche im Kraftfahrzeug erfassten Daten ist eine genaue Berechnung der Soll-Spur und der Ist-Spur möglich. Dies erhöht die Stabilisierung des Kraftfahrzeugs und die Sicherheit des Kraftfahrzeugs im Allgemeinen.

Im Rahmen der Erfindung ist es denkbar, dass das Fahrsystem eine antizipatorische Kontrolleinheit und eine kompensatorische Kontrolleinheit zur Erzeugung der Eingangsgröße aus der Soll-Spur aufweist, wobei die kompensatorische Kontrolleinheit bei der Berechnung der Eingangsgröße den Einfluss einer Störung auf die Ist-Spur berücksichtigt. Gleichwohl kann die Störung auch schon von der antizipatorischen Kontrolleinheit bereits berücksichtigt beziehungsweise geschätzt werden.

Als antizipatorisch wird hier vorrausschauend verstanden, das heißt, dass die antizipatorische Kontrolleinheit vorrausschauend arbeitet. Beispielsweise wird sich bei einer anstehenden Kurve schon im Voraus der Lenkwinkel ändern, sodass die antizipatorische Kontrolleinheit diesen schon vorher abgreifen kann, um aus dieser Soll-Fahrzeug-Reaktion, beispielsweise einem Lenkeinschlag, die Eingangsgröße der Soll-Spur zu erhalten, um aus dieser die Ist-Spur zu berechnen.

Die kompensatorische Kontrolleinheit unterstützt die antizipatorische Kontrolleinheit bei der Erzeugung der Eingangsgröße aus der Soll-Fahrzeug-Reaktion, in dem sie Störungen, welche von außen auf das Kraftfahrzeug wirken in die Berechnung einbezieht. Die Eingangsgröße ist somit eine Überlagerung einer antizipierten und kompensierten Soll-Spur. Bei den Störungen, die die kompensatorische Kontrolleinheit ausgleicht, kann es sich beispielsweise um diverse Straßenbedingungen handeln, die einen Einfluss auf die Spur des Kraftfahrzeugs haben können und die Ist-Spur negativ beeinflussen können. Diese Straßenbedingungen können beispielsweise die Hanglage der Straße, eine Ballung des Asphalts, Spurrinnen oder Seitenwind sein.

Für die antizipatorische Steuerung kann das Kraftfahrzeug einen Sensor, insbesondere eine Kamera und/oder einen Lidar-Sensor und/oder einen Radar-Sensor aufweisen. Ferner ist es denkbar, dass das Fahrsystem auf die noch funktionierenden Bauteile der Hauptebene und/oder der Sicherheitsebene zugreifen kann. Beispielsweise kann die Eingangsgröße vom Lenkwinkelsensor der Hauptebene kommen, auch wenn deren Radlenkwinkelaktuatoren defekt sind, und die Sicherheitsebene ausgefallen ist. Dies erhöht die Genauigkeit der Fahrzeugquerführung aufgrund einer genaueren Berechnung der Brems- und Antriebskräfte. Es kann im Rahmen der Erfindung vorgesehen sein, dass die erste Bremskraft und/oder die zweite Bremskraft und/oder die dritte Bremskraft und/oder die vierte Bremskraft durch einen kontinuierlichen Bremseingriff oder ein Bremsdruckpulsen aufgebracht wird.

Dies ermöglicht einen genauen und angepassten Bremseingriff für die Fahrzeugquerführung und erhöht den Fahrkomfort.

Ferner ist es möglich, dass die Antriebskräfte über ein offenes oder sperrbares Differential aufgebracht werden können, um somit synthetisch die einseitig absetzbare Brems- oder Antriebskraft zu erhöhen.

Die obenstehende Aufgabe wird ferner gelöst durch ein erfindungsgemäßes Kraftfahrzeug mit einem oben beschriebenen Sicherheitssystem zum Ausführen eines oben beschriebenen Sicherheitsverfahrens. So kann auch bei niedrigen Kraftschlussbeiwerten ein höheres Giermoment erzeugt werden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei ist die Erfindung in den folgenden Figuren gezeigt:
- Figur 1: schematische Darstellung eines Kraftfahrzeugs mit einem Sicherheitssystem;
- Figur 2: schematische Darstellung eines Sicherheitssystems;
- Figur 3: schematische Darstellung des Sicherheitsverfahrens;
- Figur 4: schematische Darstellung einer Fahrzeugquerführung.

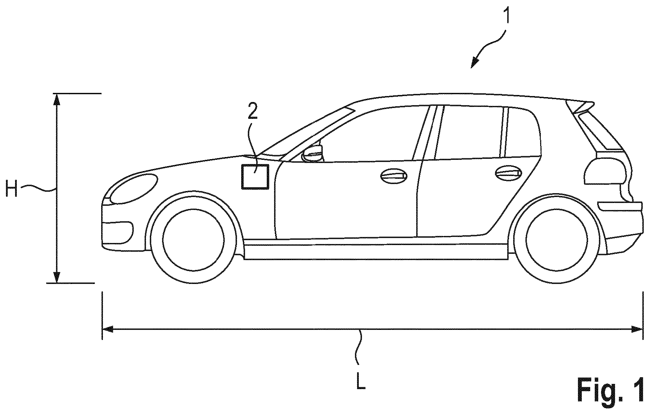

In Fig. 1 ist ein Kraftfahrzeug 1 mit einem Sicherheitssystem 2 zur Fahrzeugquerführung gezeigt.

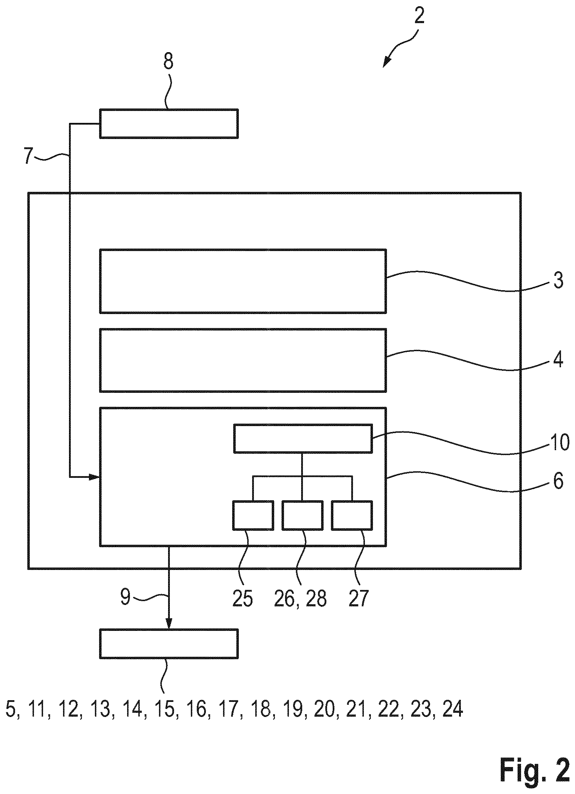

Das Sicherheitssystem 2 zur Fahrzeugquerführung für ein Steer-by-Wire Lenksystem eines Kraftfahrzeuges 1 ist schematisch in Fig. 2 dargestellt. Es weist eine Hauptbetriebsebene 3 zur Übertragung eines Lenkradwinkels an zumindest ein Rad 5 des Kraftfahrzeugs 1, und mit einer Sicherheitsebene 4 zur Übertragung eines Lenkradwinkels an zumindest ein Rad 5 des Kraftfahrzeugs 1 auf. Dabei ist die Sicherheitsebene 4 dazu eingerichtet, bei einem Ausfall der Hauptbetriebsebene 3 aktiv zu werden. Um eine weitere Rückfallebene zur Verfügung zu stellen, ist eine Not-Betriebsebene 6 zur Fahrzeugquerführung vorgesehen. Die Not-Betriebsebene 6 wird aktiv sobald es zu einem Ausfall der Hauptbetriebsebene 3 und/oder Sicherheitsebene 4 kommt.

Im Allgemeinen ist die Not-Betriebsebene 6 dazu eingerichtet, aus einer Eingangsgröße 7 der Soll-Spur 8 eine Ist-Spur 9 zu erzeugen. Sie übernimmt dies, in einem Not-Betriebsfall des Sicherheitssystems 2, d.h. bei dem Ausfall der Hauptbetriebsebene 3 und/oder der Sicherheitsebene 4.

Das dargestellte Kraftfahrzeug 1 weist einen Einzelradantrieb auf, das heißt, jedes Rad 5 kann individuell angesteuert werden, um die Fahrzeugquerführung zu gewährleisten. Aus diesem Grund weist die Not-Betriebsebene 6 für die Berechnung 150 der Ist-Spur 9 eine Not-Kontrolleinheit 10 auf. Dabei ist die Not-Kontrolleinheit 10 dazu eingerichtet, aus der Eingangsgröße 7 der Soll-Spur 8 eine erste Bremskraft 13 oder eine erste Antriebskraft 14 für ein erstes Rad 5, 15 des Kraftfahrzeugs 1 und/oder eine zweite Bremskraft 16 oder eine zweite Antriebskraft 17 für ein zweites Rad 5, 18 des Kraftfahrzeugs 1 und/oder eine dritte Bremskraft 19 oder dritte Antriebskraft 20 für ein drittes Rad 5, 21 und/oder eine vierte Bremskraft 22 oder vierte Antriebskraft 23 für ein viertes Rad 5, 24 des Kraftfahrzeugs 1 zu berechnen. Hierfür sind auf der Not-Kontrolleinheit 10 der Not-Betriebsebene 6 ein Fahrzeugmodell 25, ein Modell zu Berechnung von Soll-Brems- und Antriebskräften 26 und ein Fahrwerkmodell 27 hinterlegt. Demnach kann die Not-Betriebsebene 6 in Abhängigkeit der Abmessungen, wie Länge L und Höhe H, aus dem Fahrzeugmodell 25 und der Antriebsart, bzw. dem derzeitigen Gegenlenkverhalten der einzelnen Räder 5, 15, 18, 21, 24, aus dem Fahrwerkmodell 27, mittels des Modells zur Berechnung von Soll-Brems- und Antriebskräften 26 die jeweiligen Bremskräfte 11 und Antriebskräfte 12 berechnen, um die ist-Spur 9 zu erzeugen.

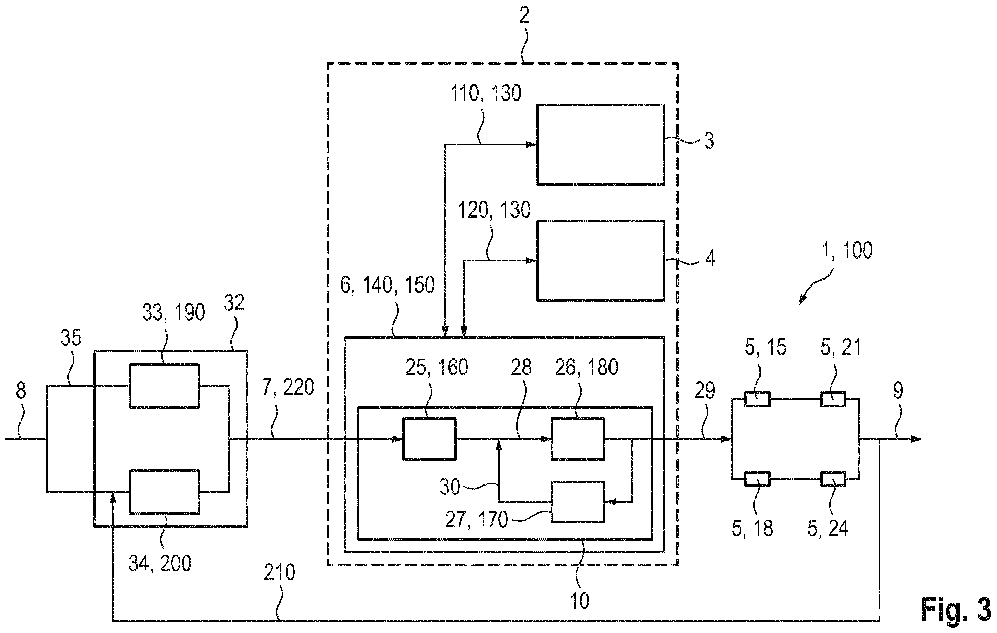

In Fig. 3 ist das Sicherheitsverfahren 100 zur Fahrzeugquerführung mit einem Sicherheitssystem 2 gemäß Fig. 2 gezeigt. Dieses umfasst die folgenden Schritte:
- Feststellen 110 eines Ausfalls der Hauptbetriebsebene 3, und/oder
- Feststellen 120 eines Ausfalls der Sicherheitsebene 4,
- Aktivieren 130 der Not-Betriebsebene 6 zur Fahrzeugquerführung, wobei in der Not-Betriebsebene 6 eine Not-Kontrolleinheit 10 aus einer Soll-Spur 8 eine Ist-Spur 9 des Kraftfahrzeugs 1 erzeugt.

Im vorliegenden Ausführungsbeispiel handelt es sich um ein Sicherheitssystem 2 für ein automatisiert oder autonom fahrendes Kraftfahrzeug 1 mit einem Fahrsystem 32, wobei die Soll-Spur 8 mittels eines Fahrsystems 32 erzeugt 140 wird, wobei die Eingangsgröße 7 der Not-Betriebsebene 6 mit der Soll-Spur 8 korreliert. Die Aufgabe des Fahrsystems kann in dem dargestellten System auch der Fahrer durch seine antizipatorischen und kompensatorischen Fähigkeiten übernehmen.

Sofern die Not-Betriebsebene 6 aktiviert wird, erzeugt 140 die Not-Kontrolleinheit 10 aus der Eingangsgröße der Soll-Spur 8 die Ist-Spur 9. Dabei wird durch die Not-Kontrolleinheit 10 zumindest eine erste Bremskraft 13 oder erste Antriebskraft 14 für ein erstes Rad 15 des Kraftfahrzeugs 1 und/oder eine zweite Bremskraft 16 oder zweite eine Antriebskraft 12 für ein zweites Rad 18 des Kraftfahrzeugs 1 und/oder eine dritte Bremskraft 19 oder dritte Antriebskraft 20 für ein drittes Rad 21 und/oder eine vierte Bremskraft 22 oder vierte Antriebskraft 23 für ein viertes Rad 24 des Kraftfahrzeugs 1 berechnet 150.

Für diese Berechnung 150 der Bremskräfte 11 und Antriebskräfte 12 der einzelnen Räder 5, 15, 18, 21, 24 des Kraftfahrzeugs 1 greift die Not-Kontrolleinheit 10 auf das hinterlegte Fahrzeugmodell 25 zu, wobei mittels des Fahrzeugmodells 25 aus der Eingangsgröße 7 ein Soll-Giermoment 28 des Kraftfahrzeugs 1 ermittelt 160 wird. Dabei wird aus dem Soll-Giermoment 28 eine erste Bremskraft 13 oder erste Antriebskraft 14 für ein erstes Rad 15 des Kraftfahrzeugs 1 und/oder eine zweite Bremskraft 16 oder eine zweite Antriebskraft 17 für ein zweites Rad 18 des Kraftfahrzeugs 1 und/oder eine dritte Bremskraft 19 oder dritte Antriebskraft 20 für ein drittes Rad 21 und/oder eine vierte Bremskraft 22 oder vierte Antriebskraft 23 für ein viertes Rad 24 des Kraftfahrzeugs 1 berechnet 150.

Ferner greift die Not-Kontrolleinheit 10 auf ein hinterlegtes Fahrwerkmodell 27 zu, wobei mittels des Fahrwerkmodells 27 aus der am ersten Rad 15 des Kraftfahrzeugs 1 eingestellten ersten Bremskraft 13 oder der ersten Antriebskraft 14 und/oder der am zweiten Rad 18 des Kraftfahrzeugs 1 eingestellten zweiten Bremskraft 16 oder der zweiten Antriebskraft 17 und/oder der am dritten Rad 21 des Kraftfahrzeugs 1 eingestellten dritten Bremskraft 19 oder der dritten Antriebskraft 20 und/oder der am vierten Rad 24 des Kraftfahrzeugs 1 eingestellten vierten Bremskraft 22 oder der vierten Antriebskraft 23 ein Stör-Giermoment 30 ermittelt 170 wird.

Um die Sicherheit weiterhin zu erhöhen bzw. um die Fahrzeugquerführung mittels des Sicherheitssystems 2 weiter zu stabilisieren, greift die Not-Kontrolleinheit 10 auf das hinterlegte Modell zur Berechnung von Soll-Brems- und Antriebskräften 26 zu. Dabei wird durch das Modell zur Berechnung 150 von Soll-Brems- und/oder Antriebskräften 26 zur Ermittlung 180 der Soll-Brems- und/oder Antriebskräfte 29 das Soll-Giermoment 28 aus dem Fahrzeugmodell 25 und das Stör-Giermoment 30 aus dem Fahrwerkmodell 27 für die Berechnung der ersten Bremskraft 13 oder ersten Antriebskraft 14 für ein erstes Rad 15 des Kraftfahrzeugs 1 und/oder eine zweite Bremskraft 16 oder eine zweite Antriebskraft 12 für ein zweites Rad 18 des Kraftfahrzeugs 1 und/oder eine dritte Bremskraft 19 oder dritte Antriebskraft 20 für ein drittes Rad 21 und/oder eine vierte Bremskraft 22 oder vierte Antriebskraft 23 für ein viertes Rad 24 des Kraftfahrzeugs 1 überlagert. Die Ist-Spur 9 wird somit iterativ berechnet und enthält Information aus einer Soll-Fahrzeugreaktion 35, beispielsweise dem eingestellten Lenkwinkel, und der Störungen, dadurch werden die Antriebskräfte 12 und Bremskräfte 11 so genau berechnet, dass die Ist-Spur 9 mit einem geringen Fehler berechnet wird.

Um die Eingangsgröße 7 in die Not-Betriebsebene 6 des Sicherheitssystems 2 gewährleisten zu können, weist das Fahrsystem 32 eine antizipatorische Kontrolleinheit 33 und eine kompensatorische Kontrolleinheit 34 zur Erzeugung der Eingangsgröße 7 aus der Soll-Spur 8 auf. Dabei berücksichtigt die kompensatorische Kontrolleinheit 34 bei der Berechnung der Eingangsgröße 7 den Einfluss einer Störung auf die Ist-Spur 9. Hierfür antizipiert 190 die antizipatorische Kontrolleinheit 33 eine Soll-Fahrzeugreaktion 35, welche von der kompensatorischen Kontrolleinheit 34 kompensiert 200 wird, in dem diese eine Störgröße 36 von der Ist-Spur 9 erhält. Die kompensatorische Kontrolleinheit 34 kompensiert 200 dabei vor allem Störgrößen 36, die auf Störungen, wie Seitenwind oder Straßenbedingungen, oder ähnliches zurückzuführen sind.

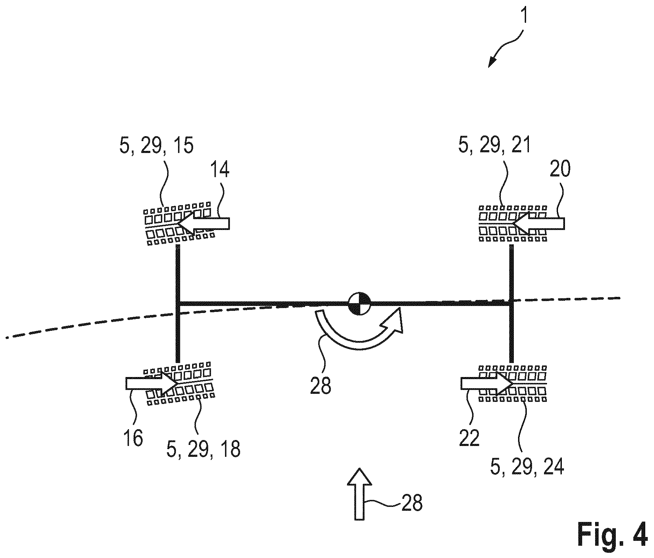

In Fig. 4 ist eine schematische Darstellung einer Fahrzeugquerführung während einer Kurvenfahrt dargestellt. Dabei hat die Not-Betriebsebene 6 einen Lenkwinkel als Soll-Fahrzeugreaktion 35 erhalten und die Not-Kontrolleinheit 10 hat aus den hinterlegten Daten des Fahrzeugmodells 25, des Fahrwerkmodells 27 und des Modells zur Berechnung von Soll-Brems- und Antriebskräften 26 für die Kurvenfahrt die Bremskräfte 11 und Antriebskräfte 12 so berechnet, dass sich stabile Soll-Brems- und/oder Antriebskräfte 29 einstellen. Für diese dargestellte Kurvenfahrt bedeutet dies, dass die Not-Kontrolleinheit 10 für das erste Rad 15 eine erste Antriebskraft 14 und für das dritte Rad 21 eine dritte Antriebskraft 20 sowie für das zweite Rad 18 eine zweite Bremskraft 16 und für das vierte Rad 24 eine vierte Bremskraft 22 berechnet hat. Dabei können die erste und dritte Antriebskraft 14, 20 gleich oder unterschiedlich sein, selbiges gilt für die zweite und vierte Bremskraft 16, 22. Dabei wird die Bremskraft 11 vorliegend mittels einem kontinuierlichen Bremseingriff aufgebracht.

### Bezugszeichenliste

- 1: Kraftfahrzeug
- 2: Sicherheitssystem
- 3: Hauptbetriebsebene
- 4: Sicherheitsebene
- 5: Rad
- 6: Not-Betriebsebene
- 7: Eingangsgröße
- 8: Soll-Spur
- 9: Ist-Spur
- 10: Not-Kontrolleinheit
- 11: Bremskraft
- 12: Antriebskraft
- 13: erste Bremskraft
- 14: erste Antriebskraft
- 15: erstes Rad
- 16: zweite Bremskraft
- 17: zweite Antriebskraft
- 18: zweites Rad
- 19: dritte Bremskraft
- 20: dritte Antriebskraft
- 21: drittes Rad
- 22: vierte Bremskraft
- 23: vierte Antriebskraft
- 24: viertes Rad
- 25: Fahrzeugmodell
- 26: Modell zur Berechnung von Soll-Brems- und Antriebskräften
- 27: Fahrwerkmodell
- 28: Soll-Giermoment
- 29: Soll-Brems- und/oder Antriebskräfte
- 30: Stör-Giermoment
- 31: Einzelantrieb
- 32: Fahrsystem
- 33: antizipatorische Kontrolleinheit
- 34: kompensatorische Kontrolleinheit
- 35: Soll-Fahrzeugreaktion
- 36: Störgröße

- 100: Sicherheitsverfahren
- 110: Feststellen eines Ausfalls der Hauptbetriebsebene
- 120: Feststellen eines Ausfalls der Sicherheitsebene
- 130: Aktivieren
- 140: Erzeugung
- 150: Berechnung
- 160: Umrechnung Lenkwinkel / Sollspur in Sollgiermoment
- 170: Ermitteln des Stör-Giermoments
- 180: Ermitteln der Soll-Brems- und/oder Antriebskräfte
- 190: Antizipieren der Soll-Fahrzeugreaktion
- 200: Kompensieren der Soll-Fahrzeugreaktion
- 210: Erhalten der Störgröße
- 220: Berechnung der Eingangsgröße

- L: Länge
- H: Höhe

## Patentansprüche

1. Sicherheitssystem (2) zur Fahrzeugquerführung für ein Steer-by-Wire Lenksystem eines Kraftfahrzeuges (1),
mit einer Hauptbetriebsebene (3) zur Übertragung eines Lenkradwinkels an zumindest ein Rad (5) des Kraftfahrzeugs (1), und
mit einer Sicherheitsebene (4) zur Übertragung eines Lenkradwinkels an zumindest ein Rad (5) des Kraftfahrzeugs (1),
wobei die Sicherheitsebene (4) dazu eingerichtet ist, bei einem Ausfall der Hauptbetriebsebene (3) aktiv zu werden,
**dadurch gekennzeichnet,**
**dass** eine Not-Betriebsebene (6) zur Fahrzeugquerführung vorgesehen ist, wobei die Not-Betriebsebene (6) dazu eingerichtet ist, bei einem Ausfall der Hauptbetriebsebene (3) und/oder Sicherheitsebene (4) aktiv zu werden und auf die Daten eines Lenkwinkelsensors der Hauptebene oder der Sicherheitsebene zuzugreifen, um die Fahrzeugquerführung gewährleisten zu können.

2. Sicherheitssystem (2) nach Anspruch 1,
**dadurch gekennzeichnet,**
**dass** die Not-Betriebsebene (6) dazu eingerichtet ist, aus einer Eingangsgröße (7) der Soll-Spur (8) eine Ist-Spur (9) zu erzeugen.

3. Sicherheitssystem (2) nach Anspruch 2,
**dadurch gekennzeichnet,**
**dass** die Not-Betriebsebene (6), insbesondere mittels einer Not-Kontrolleinheit (10), dazu eingerichtet ist, aus einer Eingangsgröße (7) der Soll-Spur (8) eine erste Bremskraft (13) oder eine erste Antriebskraft (14) für ein erstes Rad (15) des Kraftfahrzeugs (1) und/oder eine zweite Bremskraft (16) oder eine zweite Antriebskraft (17) für ein zweites Rad (18) des Kraftfahrzeugs (1) und/oder eine dritte Bremskraft (19) oder dritte Antriebskraft (20) für ein drittes Rad (21) und/oder eine vierte Bremskraft (22) oder vierte Antriebskraft (23) für ein viertes Rad (24) des Kraftfahrzeugs (1) zu berechnen.

4. Sicherheitssystem (2) nach einem der vorhergehenden Ansprüche,
**dadurch gekennzeichnet,**
**dass** in einer Not-Kontrolleinheit (10) der Not-Betriebsebene (6) ein Fahrzeugmodell (25), ein Modell zu Berechnung von Soll-Brems- und/oder Antriebskräften (26) und ein Fahrwerkmodell (27) zur Berechnung der ersten Bremskraft (13) oder ersten Antriebskraft (14) für ein erstes Rad (15) des Kraftfahrzeugs (1) und/oder eine zweite Bremskraft (16) oder eine zweite Antriebskraft (17) für ein zweites Rad (18) des Kraftfahrzeugs (1) und/oder eine dritte Bremskraft (19) oder dritte Antriebskraft (20) für ein drittes Rad (21) und/oder eine vierte Bremskraft (22) oder vierte Antriebskraft (23) für ein viertes Rad (24) des Kraftfahrzeugs (1) hinterlegt ist.

5. Sicherheitsverfahren (100) zur Fahrzeugquerführung mit einem Sicherheitssystem (2) gemäß einem der Ansprüche 1 bis 4, umfassend die folgenden Schritte:
- Feststellen (110) eines Ausfalls der Hauptbetriebsebene (3), und/oder
- Feststellen (120) eines Ausfalls der Sicherheitsebene (4),
- Aktivieren (130) der Not-Betriebsebene (6) zur Fahrzeugquerführung, wobei in der Not-Betriebsebene (6) eine Not-Kontrolleinheit (10) aus einer Soll-Spur (8) eine Ist-Spur (9) des Kraftfahrzeugs (1) erzeugt und wobei die Not-Betriebsebene auf die Daten eines Lenkwinkelsensors der Hauptebene oder der Sicherheitsebene zugreift, um die Fahrzeugquerführung gewährleisten zu können.

6. Sicherheitsverfahren (100) nach Anspruch 5,
**dadurch gekennzeichnet,**
**dass** die Not-Kontrolleinheit (10) aus einer Eingangsgröße (7) der Soll-Spur (8) die Ist-Spur (9) erzeugt (140), wobei durch die Not-Kontrolleinheit (10) zumindest eine erste Bremskraft (13) oder erste Antriebskraft (14) für ein erstes Rad (15) des Kraftfahrzeugs (1) und/oder eine zweite Bremskraft (16) oder eine zweite Antriebskraft (17) für ein zweites Rad (18) des Kraftfahrzeugs (1) und/oder eine dritte Bremskraft (19) oder dritte Antriebskraft (20) für ein drittes Rad (21) und/oder eine vierte Bremskraft (22) oder vierte Antriebskraft (23) für ein viertes Rad (24) des Kraftfahrzeugs (1) berechnet (150) wird.

7. Sicherheitsverfahren (100) nach einem der Ansprüche 5 oder 6,
**dadurch gekennzeichnet,**
**dass** in der Not-Kontrolleinheit (10) ein Fahrzeugmodell (25) hinterlegt ist, wobei mittels des Fahrzeugmodells (25) aus der Eingangsgröße (7) ein Soll-Giermoment (28) des Kraftfahrzeugs (1) ermittelt (160) wird, und wobei aus dem Soll-Giermoment (28) eine erste Bremskraft (13) oder erste Antriebskraft (14) für ein erstes Rad (15) des Kraftfahrzeugs (1) und/oder eine zweite Bremskraft (16) oder eine zweite Antriebskraft (17) für ein zweites Rad (18) des Kraftfahrzeugs (1) und/oder eine dritte Bremskraft (19) oder dritte Antriebskraft (20) für ein drittes Rad (21) und/oder eine vierte Bremskraft (22) oder vierte Antriebskraft (23) für ein viertes Rad (24) des Kraftfahrzeugs (1) berechnet (150) wird.

8. Sicherheitsverfahren (100) nach einem der Ansprüche 5 bis 7,
**dadurch gekennzeichnet,**
**dass** auf der Not-Kontrolleinheit (10) ein Fahrwerkmodell (27) hinterlegt ist, wobei mittels des Fahrwerkmodells (27) aus der am ersten Rad (15) des Kraftfahrzeugs (1) eingestellten ersten Bremskraft (13) oder der ersten Antriebskraft (14) und/oder der am zweiten Rad (18) des Kraftfahrzeugs (1) eingestellten zweiten Bremskraft (16) oder der zweiten Antriebskraft (17) und/oder der am dritten Rad (21) des Kraftfahrzeugs (1) eingestellten dritten Bremskraft (19) oder der dritten Antriebskraft (20) und/oder der am vierten Rad (24) des Kraftfahrzeugs (1) eingestellten vierten Bremskraft (22) oder der vierten Antriebskraft (23) ein Stör-Giermoment (30) ermittelt (170) wird.

9. Sicherheitsverfahren (100) nach Anspruch 8,
**dadurch gekennzeichnet,**
**dass** das Fahrwerkmodell (27) berücksichtigt, dass das Kraftfahrzeug (1) einen Einzelradantrieb oder einen Vorderachsantrieb oder einen Hinterachsantrieb oder einen Allradantrieb aufweist.

10. Sicherheitsverfahren (100) nach einem der Ansprüche 5 bis 9,
**dadurch gekennzeichnet,**
**dass** auf der Not-Kontrolleinheit (10) ein Modell zur Berechnung von Soll-Brems- und/oder Antriebskräften (29) hinterlegt ist, wobei durch das Modell zur Berechnung von Soll-Brems- und/oder Antriebskräften (29) zur Ermittlung (180) der Soll-Brems- und/oder Antriebskräfte das Soll-Giermoment (28) aus dem Fahrzeugmodell (25) und das Stör-Giermoment (30) aus dem Fahrwerkmodell (27) für die Berechnung (150) der ersten Bremskraft (13) oder ersten Antriebskraft (14) für ein erstes Rad (15) des Kraftfahrzeugs (1) und/oder eine zweite Bremskraft (16) oder zweite eine Antriebskraft (17) für ein zweites Rad (18) des Kraftfahrzeugs (1) und/oder eine dritte Bremskraft (19) oder dritte Antriebskraft (20) für ein drittes Rad (21) und/oder eine vierte Bremskraft (22) oder vierte Antriebskraft (23) für ein viertes Rad (24) des Kraftfahrzeugs (1) überlagert werden.

11. Sicherheitsverfahren (100) nach einem der Ansprüche 5 bis 10,
**dadurch gekennzeichnet,**
**dass** die Soll-Spur (8) mittels eines Fahrsystems (32) erzeugt wird, wobei die Eingangsgröße (7) der Not-Betriebsebene (6) mit der Soll-Spur (8) korreliert.

12. Sicherheitsverfahren (100) nach Anspruch 11,
**dadurch gekennzeichnet,**
**dass** das Fahrsystem (32) eine antizipatorische Kontrolleinheit (33) und eine kompensatorische Kontrolleinheit (34) zur Erzeugung (140) der Eingangsgröße (7) aus der Soll-Spur (8) aufweist, wobei die kompensatorische Kontrolleinheit (34) bei der Berechnung (220) der Eingangsgröße den Einfluss einer Störgröße (36) einer Störung auf die Ist-Spur (9) berücksichtigt.

13. Sicherheitsverfahren (100) nach einem der Ansprüche 5 bis 12,
**dadurch gekennzeichnet,**
**dass** die erste Bremskraft (13) und/oder die zweite Bremskraft (16) und/oder die dritte Bremskraft (19) und/oder die vierte Bremskraft (22) durch einen kontinuierlichen Bremseingriff oder ein Bremsdruckpulsen aufgebracht wird.

14. Kraftfahrzeug (1) mit einem Sicherheitssystem (2) gemäß einem der Ansprüche 1 bis 4 zum Ausführen eines Sicherheitsverfahrens (100) gemäß einem der Ansprüche 5 bis 13.

## Claims

1. Safety system (2) for vehicle lateral guidance for a steer-by-wire steering system of a motor vehicle (1),
comprising a main operating level (3) for transmitting a steering wheel angle to at least one wheel (5) of the motor vehicle (1), and
a safety level (4) for transmitting a steering wheel angle to at least one wheel (5) of the motor vehicle (1),
the safety level (4) being configured to become active in the event of a failure of the main operating level (3),
**characterized in that,**
an emergency operating level (6) is provided for vehicle lateral guidance, the emergency operating level (6) being configured to become active in the event of a failure of the main operating level (3) and/or safety level (4) and to access the data of a steering angle sensor of the main level or the safety level in order to be able to ensure vehicle lateral guidance.

2. Safety system (2) according to claim 1,
**characterized in that,**
the emergency operating level (6) is configured to generate an actual lane (9) from an input variable (7) of the target lane (8).

3. Safety system (2) according to claim 2,
**characterized in that,**
the emergency operating level (6), in particular by means of an emergency control unit (10), is configured to calculate a first braking force (13) or a first driving force (14) for a first wheel (15) of the motor vehicle (1) and/or a second braking force (16) or a second driving force (17) for a second wheel (18) of the motor vehicle (1) and/or a third braking force (19) or a third driving force (20) for a third wheel (21) and/or a fourth braking force (22) or a fourth driving force (23) for a fourth wheel (24) of the motor vehicle (1) from an input variable (7) of the target lane (8).

4. Safety system (2) according to any of the preceding claims,
**characterized in that,**
a vehicle model (25), a model for calculating target braking and/or driving forces (26), and a chassis model (27) for calculating the first braking force (13) or the first driving force (14) for a first wheel (15) of the motor vehicle (1) and/or a second braking force (16) or a second driving force (17) for a second wheel (18) of the motor vehicle (1) and/or a third braking force (19) or a third driving force (20) for a third wheel (21) and/or a fourth braking force (22) or a fourth driving force (23) for a fourth wheel (24) of the motor vehicle (1) are stored in an emergency control unit (10) of the emergency operating level (6).

5. Safety method (100) for vehicle lateral guidance using a safety system (2) according to any of claims 1 to 4, comprising the following steps:
- detecting (110) a failure of the main operating level (3), and/or
- detecting (120) a failure of the safety level (4),
- activating (130) the emergency operating level (6) for vehicle lateral guidance, wherein in the emergency operating level (6) an emergency control unit (10) generates an actual lane (9) of the motor vehicle (1) from a target lane (8), and wherein the emergency operating level accesses the data of a steering angle sensor of the main level or the safety level in order to be able to ensure the vehicle lateral guidance.

6. Safety method (100) according to claim 5,
**characterized in that,**
the emergency control unit (10) generates (140) the actual lane (9) from an input variable (7) of the target lane (8), at least a first braking force (13) or a first driving force (14) for a first wheel (15) of the motor vehicle (1) and/or a second braking force (16) or a second driving force (17) for a second wheel (18) of the motor vehicle (1) and/or a third braking force (19) or a third driving force (20) for a third wheel (21) and/or a fourth braking force (22) or a fourth driving force (23) for a fourth wheel (24) of the motor vehicle (1) being calculated (150) by the emergency control unit (10).

7. Safety method (100) according to either of claims 5 or 6,
**characterized in that,**
a vehicle model (25) is stored in the emergency control unit (10), a target yaw moment (28) of the motor vehicle (1) being determined (160) from the input variable (7) by means of the vehicle model (25), and a first braking force (13) or a first driving force (14) for a first wheel (15) of the motor vehicle (1) and/or a second braking force (16) or a second driving force (17) for a second wheel (18) of the motor vehicle (1) and/or a third braking force (19) or a third driving force (20) for a third wheel (21) and/or a fourth braking force (22) or a fourth driving force (23) for a fourth wheel (24) of the motor vehicle (1) being calculated (150) from the target yaw moment (28).

8. Safety method (100) according to any of claims 5 to 7,
**characterized in that,**
a chassis model (27) is stored in the emergency control unit (10), a disturbance yaw moment (30) being determined (170) by means of the chassis model (27) from the first braking force (13) set at the first wheel (15) of the motor vehicle (1) or the first driving force (14) and/or the second braking force (16) set at the second wheel (18) of the motor vehicle (1) or the second driving force (17) and/or the third braking force (19) set at the third wheel (21) of the motor vehicle (1) or the third driving force (20) and/or the fourth braking force (22) set at the fourth wheel (24) of the motor vehicle (1) or the fourth driving force (23).

9. Safety method (100) according to claim 8,
**characterized in that,**
the chassis model (27) takes into account that the motor vehicle (1) has a single-wheel drive or a front axle drive or a rear axle drive or an all-wheel drive.

10. Safety method (100) according to any of claims 5 to 9,
**characterized in that,**
a model for calculating target braking and/or driving forces (29) is stored in the emergency control unit (10), the target yaw moment (28) from the vehicle model (25) and the disturbance yaw moment (30) from the chassis model (27) for calculating (150) the first braking force (13) or the first driving force (14) for a first wheel (15) of the motor vehicle (1) and/or a second braking force (16) or a second driving force (17) for a second wheel (18) of the motor vehicle (1) and/or a third braking force (19) or a third driving force (20) for a third wheel (21) and/or a fourth braking force (22) or a fourth driving force (23) for a fourth wheel (24) of the motor vehicle (1) being superimposed by the model for calculating target braking and/or driving forces (29) in order to determine (180) the target braking and/or driving forces.

11. Safety method (100) according to any of claims 5 to 10,
**characterized in that**,
the target lane (8) is generated by means of a driving system (32), the input variable (7) of the emergency operating level (6) correlating with the target lane (8).

12. Safety method (100) according to claim 11,
**characterized in that,**
the driving system (32) comprises an anticipatory control unit (33) and a compensatory control unit (34) for generating (140) the input variable (7) from the target lane (8), the compensatory control unit (34) taking into account the influence of a disturbance variable (36) of a disturbance on the actual lane (9) when calculating (220) the input variable.

13. Safety method (100) according to any of claims 5 to 12,
**characterized in that,**
the first braking force (13) and/or the second braking force (16) and/or the third braking force (19) and/or the fourth braking force (22) are/is applied by continuous application of the brakes or brake pressure pulses.

14. Motor vehicle (1) comprising a safety system (2) according to any of claims 1 to 4 for carrying out a safety method (100) according to any of claims 5 to 13.

## Revendications

1. Système de sécurité (2) pour le guidage transversal de véhicule pour un système de direction à direction par câble (steer-by-wire) d'un véhicule automobile (1),
comportant un niveau de fonctionnement principal (3) pour la transmission d'un angle de volant de direction à au moins une roue (5) du véhicule automobile (1), et
comportant un niveau de sécurité (4) pour la transmission d'un angle de volant de direction à au moins une roue (5) du véhicule automobile (1),
dans lequel le niveau de sécurité (4) est configuré pour devenir actif en cas de défaillance du niveau de fonctionnement principal (3),
**caractérisé en ce**
**qu**'un niveau de fonctionnement de secours (6) est prévu pour le guidage transversal de véhicule, dans lequel le niveau de fonctionnement de secours (6) est configuré pour devenir actif en cas de défaillance du niveau de fonctionnement principal (3) et/ou du niveau de sécurité (4) et pour accéder aux données d'un capteur d'angle de braquage du niveau principal ou du niveau de sécurité afin de pouvoir garantir le guidage transversal de véhicule.

2. Système de sécurité (2) selon la revendication 1,
**caractérisé en ce**
**que** le niveau de fonctionnement de secours (6) est configuré pour générer une voie réelle (9) à partir d'une grandeur d'entrée (7) de la voie de consigne (8).

3. Système de sécurité (2) selon la revendication 2,
**caractérisé en ce**
**que** le niveau de fonctionnement de secours (6) est configuré pour calculer, en particulier au moyen d'une unité de commande de secours (10), à partir d'une grandeur d'entrée (7) de la voie de consigne (8), une première force de freinage (13) ou une première force d'entraînement (14) pour une première roue (15) du véhicule automobile (1) et/ou une deuxième force de freinage (16) ou une deuxième force d'entraînement (17) pour une deuxième roue (18) du véhicule automobile (1) et/ou une troisième force de freinage (19) ou une troisième force d'entraînement (20) pour une troisième roue (21) et/ou une quatrième force de freinage (22) ou une quatrième force d'entraînement (23) pour une quatrième roue (24) du véhicule automobile (1).

4. Système de sécurité (2) selon l'une des revendications précédentes,
**caractérisé en ce**
**que** sont enregistrés dans une unité de commande de secours (10) du niveau de fonctionnement de secours (6) un modèle de véhicule (25), un modèle pour le calcul de forces de freinage de consigne et/ou d'entraînement de consigne (26) et un modèle de châssis (27) pour le calcul de la première force de freinage (13) ou de la première force d'entraînement (14) pour une première roue (15) du véhicule automobile (1) et/ou d'une deuxième force de freinage (16) ou d'une deuxième force d'entraînement (17) pour une deuxième roue (18) du véhicule automobile (1) et/ou d'une troisième force de freinage (19) ou d'une troisième force d'entraînement (20) pour une troisième roue (21) et/ou d'une quatrième force de freinage (22) ou d'une quatrième force d'entraînement (23) pour une quatrième roue (24) du véhicule automobile (1).

5. Procédé de sécurité (100) pour le guidage transversal de véhicule comportant un système de sécurité (2) selon l'une des revendications 1 à 4, comprenant les étapes suivantes :
- détection (110) d'une défaillance du niveau de fonctionnement principal (3), et/ou
- détection (120) d'une défaillance du niveau de sécurité (4),
- activation (130) du niveau de fonctionnement de secours (6) pour le guidage transversal de véhicule, dans lequel une unité de commande de secours (10) génère une voie réelle (9) du véhicule automobile (1) à partir d'une voie de consigne (8) dans le niveau de fonctionnement de secours (6) et dans lequel le niveau de fonctionnement de secours accède aux données d'un capteur d'angle de braquage du niveau principal ou du niveau de sécurité pour pouvoir garantir le guidage transversal de véhicule.

6. Procédé de sécurité (100) selon la revendication 5,
**caractérisé en ce**
**que** l'unité de commande de secours (10) génère (140) la voie réelle (9) à partir d'une grandeur d'entrée (7) de la voie de consigne (8), dans lequel sont calculées (150) au moyen de l'unité de commande de secours (10) au moins une première force de freinage (13) ou une première force d'entraînement (14) pour une première roue (15) du véhicule automobile (1) et/ou une deuxième force de freinage (16) ou une deuxième force d'entraînement (17) pour une deuxième roue (18) du véhicule automobile (1) et/ou une troisième force de freinage (19) ou une troisième force d'entraînement (20) pour une troisième roue (21) et/ou une quatrième force de freinage (22) ou une quatrième force d'entraînement (23) pour une quatrième roue (24) du véhicule automobile (1).

7. Procédé de sécurité (100) selon l'une des revendications 5 ou 6,
**caractérisé en ce**
**qu**'un modèle de véhicule (25) est enregistré dans l'unité de commande de secours (10), dans lequel un couple de lacet de consigne (28) du véhicule automobile (1) est déterminé (160) à partir de la grandeur d'entrée (7) au moyen du modèle de véhicule (25), et dans lequel sont calculées (150), à partir du couple de lacet de consigne (28), une première force de freinage (13) ou une première force d'entraînement (14) pour une première roue (15) du véhicule automobile (1) et/ou une deuxième force de freinage (16) ou une deuxième force d'entraînement (17) pour une deuxième roue (18) du véhicule automobile (1) et/ou une troisième force de freinage (19) ou une troisième force d'entraînement (20) pour une troisième roue (21) et/ou une quatrième force de freinage (22) ou une quatrième force d'entraînement (23) pour une quatrième roue (24) du véhicule automobile (1).

8. Procédé de sécurité (100) selon l'une des revendications 5 à 7,
**caractérisé en ce**
**qu'**un modèle de châssis (27) est enregistré sur l'unité de commande de secours (10), dans lequel, au moyen du modèle de châssis (27), un couple de lacet perturbateur (30) est déterminé (170) à partir de la première force de freinage (13) ou de la première force d'entraînement (14) réglée au niveau de la première roue (15) du véhicule automobile (1) et/ou de la deuxième force de freinage (16) ou de la deuxième force d'entraînement (17) réglée au niveau de la deuxième roue (18) du véhicule automobile (1) et/ou de la troisième force de freinage (19) ou de la troisième force d'entraînement (20) réglée au niveau de la troisième roue (21) du véhicule automobile (1) et/ou de la quatrième force de freinage (22) ou de la quatrième force d'entraînement (23) réglée au niveau de la quatrième roue (24) du véhicule automobile (1).

9. Procédé de sécurité (100) selon la revendication 8,
**caractérisé en ce**
**que** le modèle de châssis (27) tient compte du fait que le véhicule automobile (1) présente un entraînement individuel des roues ou un entraînement de l'essieu avant ou un entraînement de l'essieu arrière ou un entraînement des quatre roues.

10. Procédé de sécurité (100) selon l'une des revendications 5 à 9,
**caractérisé en ce**
**qu**'un modèle pour le calcul de forces de freinage de consigne et/ou d'entraînement de consigne (29) est enregistré sur l'unité de commande de secours (10), dans lequel sont superposés, au moyen du modèle pour le calcul des forces de freinage de consigne et/ou d'entraînement de consigne (29) pour la détermination (180) des forces de freinage de consigne et/ou d'entraînement de consigne, le couple de lacet de consigne (28) provenant du modèle de véhicule (25) et le couple de lacet perturbateur (30) provenant du modèle de châssis (27) pour le calcul (150) de la première force de freinage (13) ou de la première force d'entraînement (14) pour une première roue (15) du véhicule automobile (1) et/ou d'une deuxième force de freinage (16) ou d'une deuxième force d'entraînement (17) pour une deuxième roue (18) du véhicule automobile (1) et/ou d'une troisième force de freinage (19) ou d'une troisième force d'entraînement (20) pour une troisième roue (21) et/ou d'une quatrième force de freinage (22) ou d'une quatrième force d'entraînement (23) pour une quatrième roue (24) du véhicule automobile (1).

11. Procédé de sécurité (100) selon l'une des revendications 5 à 10,
**caractérisé en ce**
**que** la voie de consigne (8) est générée au moyen d'un système de conduite (32), dans lequel la grandeur d'entrée (7) du niveau de fonctionnement de secours (6) est corrélée avec la voie de consigne (8).

12. Procédé de sécurité (100) selon la revendication 11,
**caractérisé en ce**
**que** le système de conduite (32) présente une unité de commande d'anticipation (33) et une unité de commande de compensation (34) pour la génération (140) de la grandeur d'entrée (7) à partir de la voie de consigne (8), dans lequel l'unité de commande de compensation (34) tient compte, lors du calcul (220) de la grandeur d'entrée, de l'influence d'une grandeur perturbatrice (36) d'une perturbation sur la voie réelle (9).

13. Procédé de sécurité (100) selon l'une des revendications 5 à 12,
**caractérisé en ce**
**que** la première force de freinage (13) et/ou la deuxième force de freinage (16) et/ou la troisième force de freinage (19) et/ou la quatrième force de freinage (22) sont appliquées par une intervention de freinage continue ou une impulsion de pression de freinage.

14. Véhicule automobile (1) comportant un système de sécurité (2) selon l'une des revendications 1 à 4 pour la mise en œuvre d'un procédé de sécurité (100) selon l'une des revendications 5 à 13.
